# EUROPEAN PATENT SPECIFICATION

(11) **EP 4 630 611 B1**
(45) Date of publication and mention of the grant of the patent: **19.08.2026**
(21) Application number: 23836940.9
(22) Date of filing: 06.12.2023
(51) Int. Cl.: D04H 1/52, D04H 1/4274, D06H 7/00

(54) **PROCESSING METHOD AND APPARATUS TO RECYCLE A STITCH-BOND NONWOVEN FABRIC AND RECYCLED NONWOVEN FABRIC OBTAINED USING SAME**
VERARBEITUNGSVERFAHREN UND VORRICHTUNG ZUR WIEDERVERWERTUNG EINES NÄHGEWIRKTEN VLIESSTOFFS UND DAMIT ERHALTENER RECYCELTER VLIESSTOFF
PROCÉDÉ ET APPAREIL DE TRAITEMENT POUR RECYCLER UN TISSU NON TISSÉ À LIAISON PAR COUTURE ET TISSU NON TISSÉ RECYCLÉ OBTENU EN LES UTILISANT

(30) Priority: 07.12.2022 IT 202200025242
(43) Date of publication of application: 15.10.2025
(73) Proprietor: Pratrivero S.p.A., 13835 Valdilana (BI) (IT)
(72) Inventor: BARBERIS CANONICO, Sergio, 13835 VALDILANA (BI) (IT)
(74) Representative: Studio Torta S.p.A.
(86) International application number: PCT/IB2023/062289
(87) International publication number: WO 2024/121764

(56) References cited:
- CN-U- 216 947 601
- US-A- 3 818 790

## Description

### Cross-Reference to Related Applications

This Patent Application claims priority from Italian Patent Application No. 102022000025242 filed on December 7, 2022

### TECHNICAL FIELD

The present invention concerns a processing method to recycle a stitch-bond nonwoven fabric and a relative recycled nonwoven fabric. The present invention also concerns a processing apparatus to recycle a stitch-bond nonwoven fabric.

In particular, the present invention is advantageously, but not exclusively, applied in the recycling of stitch-bond nonwoven fabric, to which the following description will explicitly refer without loss of generality.

### CONTEXT OF THE INVENTION

Various types of nonwoven fabric, generically an industrial product often used as an alternative to conventional woven fabrics, are known. Unlike the latter, nonwoven fabric is not obtained by weaving yarns, usually weft and warp, but by joining loose fibres using mechanical, thermal or chemical processes (with the aid of glues or adhesives).

For example, nonwoven fabric is particularly used in the geotextile sector (surface stabilization layers), agricultural sector (mulching, crop covering), medical sector (disposable gowns, face masks) and for furnishing (cushion covers, mattresses, rugs, upholstery).

The fibres that compose most of the non-woven fabric can be made of different materials (viscose, polyester, cotton, etc..); the fibres can be produced simultaneously with or prior to production of the nonwoven fabric and the type of material and production process for forming and binding the web determine to a large extent the characteristics of the nonwoven fabric, making it more suitable for one or another application.

Broadly speaking, the fibre binding process can be carried out by mechanical, thermal or chemical processes, by water jets, or by needles (usually hooked, giving the fibres mechanical strength by "intersecting" them) or the fibres can be bound by means of yarn.

The latter process results in a sub-category of nonwovens called stitch bond.

To better understand the recycling processes, the most common production process to obtain a stitch-bond nonwoven fabric is briefly summarised below.

Firstly, the raw material is composed mainly of the discontinuous raw fibre, in the form of staple, which is commonly sold compressed in bales. The first processing step consists in opening these bales and freeing in mixed clumps the different components. The next operation is carding, performed by a carding machine, usually comprising large cylinders with toothed profile that disentangle and align the fibres parallel to one another to form a web having uniform weight and thickness. Within the web that comes out of the carding machine, the fibres are stratified and tend to be oriented in the same direction (which usually coincides with the direction of the length or feed of the web of fibres to be carded).

The web obtained is then laid by a web laying machine, thereby producing a web of oriented fibres created by overlapping the incoming web in layers. The outgoing web has a development substantially (approximately) orthogonal to that of the incoming web and in it the fibres are oriented substantially (approximately) transversely to the web or orthogonal to the feed direction of the web.

In the outgoing web the different overlapped layers are then united to form the final product by means of binding yarns, which are used to create a series of continuous stitches forming binding lines (also known as and below called warp lines), which run through the nonwoven fabric web longitudinally.

Due to the presence of these sequences of stitches (visually similar to the warps of textile products) and due to the mechanical characteristics of the stitch-bond nonwoven fabric, the latter is used in various applications as an alternative to knit fabric, namely the classic weft and warp fabrics.

For the sake of clarity, and to avoid doubts or ambiguities, it should be noted that the nonwoven fabric here called stitch bond is also known under other names as "hybrid fabric". The official product classification, emphasising its characteristic knit production process, classifies it as woven fabric or knit fabric instead of nonwoven.

In addition, its production cycle can also differ from the above generic description; for example, needlefelting pre-treatments are known or others carried out for process convenience or to support binding of the fibres.

In short, the main characteristic of the stitch-bond nonwoven fabric is that it is bound by stitches, regardless of any other supplementary treatments for union of the fibres and any classifications or names that differ from the one used in this text.

As previously indicated, the applications of the stitch-bond nonwoven fabric can be multiple, especially in products which, at the end of their life, can (and should) be recycled.

Furthermore, apart from recycling of the semi-finished product (namely the nonwoven fabric) at the end of its life, the nonwoven fabric production chain also produces waste. The edges of the web coming out of the industrial production lines are discarded, together with the products having manufacturing defects, generating waste at a time when environmental considerations are all-important.

Stitch-bond nonwoven fabric is currently recycled by tearing, chopping or shredding the semi-finished product to be recycled which is then reintroduced at the beginning of the raw fibre production cycle or in a low percentage with the fibre to be carded (in other words, at the beginning of the raw fibre production process or at the beginning of the process that starts from the raw fibre to form the non-woven web).

However, the currently known recycling methods generate a lot of dust and short fibres which, by their very nature, are missed by the recycling process.

Furthermore, tearing or chopping the semi-finished products to be recycled results in fibres with poor structural resistance.

In fact, when they are introduced into the web production process, given percentages of recycled fibre (out of the total fibre used) must not be exceeded in order not to compromise the mechanical characteristics of the web produced.

In short, the fibre recycled by means of the known methods deteriorates in terms of mechanical qualities compared to non-recycled raw fibre and this degradation increases at each recycling process (if the already recycled fibre is recycled again, its characteristics will deteriorate further). Currently, therefore, the use of recycled fibre results in degradation of the quality of the semi-finished product and therefore of the final product, which may be acceptable for very low percentages of recycled fibre, but makes the semi-finished product less attractive to the consumer.

The need for an efficient recycling method in this field is therefore felt.

The object of the present invention is to provide a processing method to recycle a stitch-bond nonwoven fabric, a processing apparatus to recycle a stitch-bond nonwoven fabric and a relative recycled nonwoven fabric, which are at least partially free from the drawbacks described above and, at the same time, are easy and inexpensive to produce.

### SUMMARY

In accordance with the present invention, a processing method to recycle a stitch-bond nonwoven fabric, a processing apparatus to recycle a stitch-bond nonwoven fabric and a relative recycled nonwoven fabric are provided as claimed in the following independent claims and, preferably, in any one of the claims depending directly or indirectly on the independent claims.

The dependent claims describe preferred embodiments of the present invention forming an integral part of the present description.

### BRIEF DESCRIPTION OF THE DRAWINGS

The present invention will now be described with reference to the attached drawings, which illustrate some non-limiting embodiment examples thereof, in which:
- figure 1 is a perspective schematic view, with parts removed for clarity, of an apparatus in accordance with a first embodiment of the present invention;
- figure 2 is a perspective schematic view, with parts removed for clarity, of an apparatus in accordance with a second embodiment of the present invention; and
- figure 3 is a perspective schematic view, with parts removed for clarity, of a portion of semi-finished product obtained by means of the apparatuses of figures 1 and 2.

### DETAILED DISCLOSURE

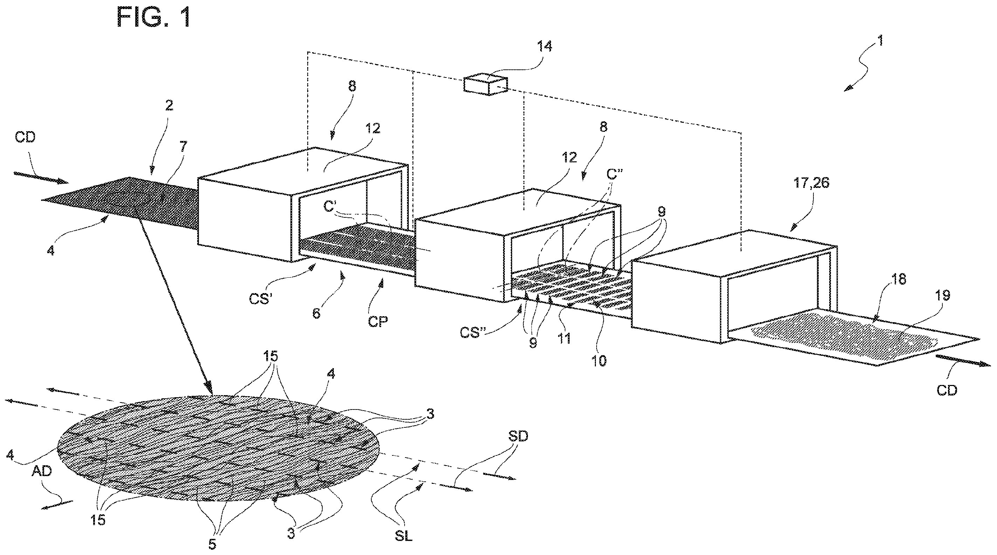

In figure 1, the number 1 generically indicates, overall, a processing apparatus to recycle a stitch-bond nonwoven fabric 2.

The same reference numbers and letters in the figures identify the same elements or components with the same function.

In the context of the present description, the term "second" component does not imply the presence of a "first" component. Said terms are used as labels to improve clarity and should not be understood in a limiting manner.

The elements and characteristics illustrated in the different preferred embodiments, including the drawings, can be combined with one another without departing from the protective scope of the present application as described below.

As mentioned in the introduction, the term stitch-bond indicates a type of nonwoven fabric 2 in which layers of fibres of the nonwoven fabric are bound by means of binding yarns 3, which are used to create series of continuous stitches forming binding lines SL (below also called warp lines), which run through the web of nonwoven fabric.

In particular, therefore, the apparatus 1 is configured to carry out work processes for recycling the nonwoven fabric 2, which comprises a planar substrate 4 of fibres 5 and a plurality of binding yarns 3 which are stitched onto the planar substrate **4.** In this way, the fibres 5 that compose the planar substrate 4 are bound (constrained) to one another due (also) to the mechanical action of the binding yarns 3.

As already mentioned, the fibres 5 comprised in (composing) the planar substrate 4 are intertwined, lie flat and are oriented in the direction of the width of the web.

For example, but without limitation, the binding yarns can be made of polyester, viscose, polypropylene, cotton, polyamide or a combination thereof.

In particular, the binding yarns 3 extend in at least one binding direction SD, on which the binding lines SL lie, preferably parallel.

In particular, the binding direction SD is parallel to the conveying direction CD.

Preferably, but without limitation, the apparatus 1 comprises means of detection to verify the orientation of the binding direction SD in order to ensure that the method described below can be performed.

Some non-limiting embodiments of the stitch-bond nonwoven fabric 2 comprise the addition of further binding yarns which can develop, in addition, in a direction both parallel and orthogonal to the orientation of the fibres 5 or with inclinations and types of stitches different from the binding yarns 3.

Preferably but without limitation, the fibres 5 of the non-woven fabric 2 are previously carded so that they are arranged mainly in an average direction AD, which is transverse, in particular substantially (almost) orthogonal to the binding direction SD (namely to the conveying direction CD).

Advantageously, the apparatus 1 comprises a conveying system 6 (for example a belt or roller system, of known type and not further described below), which is configured to convey at least one web 7 of the nonwoven fabric 2 along a conveying plane CP in a conveying direction CD.

Preferably but without limitation, the fibres 5 comprised in (composing) the planar substrate 4 are intertwined, lie flat and are oriented in the direction of the width of the web 7, as illustrated in the non-limiting embodiment of figure 1.

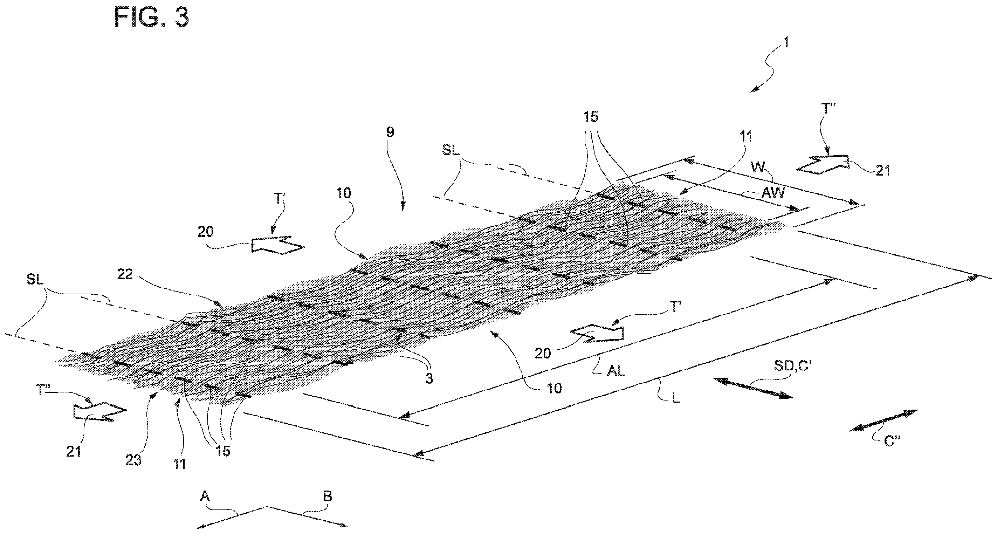

In some non-limiting cases, the apparatus 1 comprises at least one cutting system 8 to cut the web 7 of nonwoven fabric in a first cutting direction C' and/or in a second cutting direction C", different from the first cutting direction C', dividing it into quadrangular portions 9 (see the embodiment in figure 3). In other words, the web 7 of nonwoven fabric is cut in at least one direction C', C" whether parallel to the development of the fibres 5 or orthogonal to them. Preferably, the web 7 of nonwoven fabric is cut in both directions C', C".

In other non-limiting cases, the apparatus 1 comprises at least one cutting system 8 to cut the yarns 3, so that their length is smaller than the width of the web 7 of nonwoven fabric 2. In particular, in said embodiments, the web 7 is cut only transversely to the conveying direction CD to obtain the quadrangular (in particular rectangular) portions 9.

Preferably, therefore, instead of cutting the web 7 in quadrangular (rectangular) portions 9, the cutting system 8 is configured to cut only the binding yarns 3, so as to reduce the tenacity of the binding yarns 15, allowing the fibres 5 to be freed or pulled out.

In general, cutting of the binding yarns 3 allows portions 9 having larger dimensions to be recycled and/or the web 7 of nonwoven fabric to be cut in one single cutting direction C', C'', or not to be cut at all, allowing the fibres 5 to be pulled out (in particular by means of a carding machine).

According to some non-limiting embodiments, the web 7 of nonwoven fabric 2 comprises binding yarns 3 extending in a plurality of directions (not parallel to one another). In these cases, preferably, the cutting system 8 is configured to cut the binding yarns 3 in more than one direction to sufficiently free the fibres 5 of the substrate 4.

In particular, the first cutting direction C' and the second cutting direction C'' are orthogonal to each other, so as to form substantially rectangular portions 9 of the web 7 of nonwoven fabric 2 comprising a larger side 10 (in detail a pair of larger sides 10 opposite and parallel to each other) and a smaller side 11 (in detail a pair of smaller sides 11 opposite and parallel to each other).

If the web 7 is cut only transversely to obtain the quadrangular (in particular rectangular) portions 9, the smaller side 11 corresponds to the width of the web 7 and the larger side 10 depends on the distance between two consecutive cutting lines CL. In particular, what is described below in relation to the embodiments illustrated (especially in relation to the proportions between larger side 10 and smaller side 11), applies also if the quadrangular portions 9 are obtained by means of one single cutting direction. In other words, the larger side 10 can coincide with the width of an entire piece of fabric (namely an entire web 7).

In some non-limiting cases, like the one illustrated in figure 1, the cutting system 8 comprises two different cutting stations 12, arranged sequentially in the conveying direction CD. In particular, a first station 12 cuts the web 7 in the first cutting direction C' and a second station 12 cuts the web 7 in the second cutting direction C".

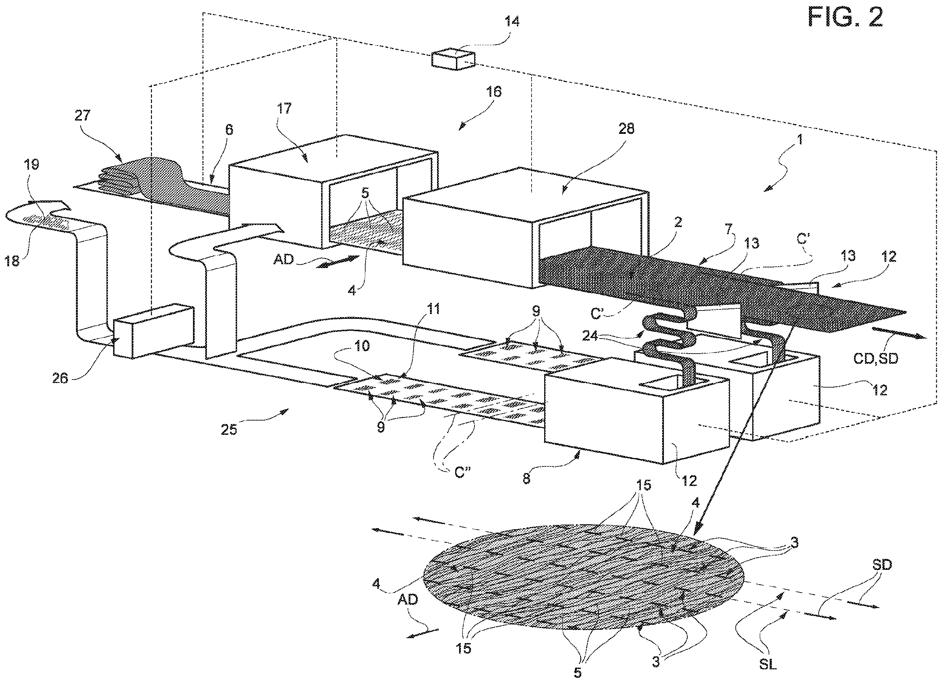

In particular, the cutting system 8, in detail each cutting station 12, comprises one or more blade elements 13 (preferably rotating, but optionally also fixed, like the blade elements 13 illustrated in the non-limiting embodiment of figure 2) or other cutting system (for example, without limitation, an ultrasound cutting system). In the stations 12 of the attached figures the blade elements 13 are internal and not illustrated for the sake of simplicity. Alternatively, the binding yarns can be torn using cylinders or similar, toothed in a direction parallel to the fibres. Also in this case, the effect is to impact as little as possible on the fibres by exerting a mechanical cutting and tearing function on the warp yarn component.

In addition, the apparatus 1 comprises a control unit 12, of known type and therefore not further described, which is configured (namely programmed) to command the actuator systems of the apparatus 1 so as to control the motion of the movable parts thereof (conveying system 6, blade elements 13, etc.).

According to a further aspect of the present invention, a processing method is provided to recycle a stitch-bond nonwoven fabric. In particular, the control unit is configured to command the apparatus 1 to carry out said method, which will be described below.

The method comprises a step of conveying the web 7 of nonwoven fabric 2 along the conveying plane CP in the conveying direction CD; in particular through the processing apparatus 1, by means of the conveying system 6.

Furthermore, the method comprises the step of cutting the web 7 of nonwoven fabric 2 in the first cutting direction C' and in the second cutting direction C'' which, as said, is different from the first cutting direction C'. In this way, the web 7 of nonwoven fabric 2 is divided into quadrangular portions 9.

Advantageously but without limitation, and as illustrated in the embodiment of figure 1, the first cutting direction C' and the second cutting direction C" are orthogonal to each other, so as to form portions 9 of the web 7 of nonwoven fabric 2 which are substantially rectangular and comprise the larger side 10, in particular a pair of larger sides 10, and the smaller side 11, in particular a pair of smaller sides 11.

Preferably, and as illustrated in the non-limiting embodiment of figure 3, the larger side 10 extends in a first direction A substantially orthogonal to the binding direction SD, while the smaller side 11 extends in a second direction B substantially parallel to the binding direction SD. In other words, the larger side 10 is oriented orthogonally to the binding yarns 3 (namely orthogonally to the warp).

According to some preferred non-limiting embodiments, the larger side 10 has a length L at least equal to, preferably greater than, the average length AL of the fibres 5 comprised in the planar substrate 4.

Preferably, the larger side 10 has dimensions measurable in cm (namely less than one metre, in particular less than half a metre, more in particular less than 20 cm).

In particular, the larger side 10 has a length L greater by at least 2%, in particular at least 5%, more in particular at least 10% relative to the average length AL of the fibres 5 of the planar substrate 4. More in particular, the larger side 10 has a length L greater by at least 50%, in particular by at least 100% relative to the average length AL of the fibres 5 of the planar substrate 4.

In particular, the length L of the larger side is smaller than 250%, more precisely 200%, in detail 150%, of the average length AL of the fibres 5.

It is therefore evident that, according to the length of the fibres 5, the length L of the larger side of the rectangular portions 9 also varies. In particular, the correct value of the length L is determined empirically according to the type of fibre and nonwoven fabric to be recycled.

For example, without limitation, fibres 5 with average length AL of 60 mm can determine a larger side 10 with length L of 65 mm or more.

Preferably, therefore, the average length AL of the fibres 5 conditions the size of the larger side 10 of the rectangular portions 9.

Preferably but without limitation, the smaller side 11 has a length W at least equal to, preferably greater than, the average width AW of the fibres 5 comprised in the planar substrate 4.

In particular, the smaller side 11 has a length W equal to or greater than 1 cm, in particular from 2 to 7 cm, more in particular from 3 to 5 cm.

Preferably, and as illustrated in the non-limiting embodiment of figure 3 (in which six are illustrated), the smaller side 11 comprises a limited number of stitches 15 of the binding yarns 3, in particular less than fifteen, more in particular less than ten, preferably less than seven. In other words, along the length W, each portion 9 has a limited number of stitches 15. In this way, namely by severing the binding or warp yarns 3, the stitches 15 created by them widen, facilitating freeing of the fibres 5, or in any case making them less cohesive.

In particular, the length of the stitches 15 (namely the distance between two consecutive stitches 15) conditions the size of the smaller side 11 of the rectangular portion 9. In detail, the greater the length of the stitches 15, the greater the length W of the smaller side 11 of the rectangular portion 9.

According to some non-limiting cases, the density of the stitches 15 conditions both the length L of the larger side 10 and the length W of the smaller side 11. By the expression "density of the stitches" we mean the quantity of stitches 15 per unit of space (for example per cm).

In detail, it has been experimentally found that the greater the density of the stitches 15 in the direction A (namely the quantity of stitching lines SL per unit of space), the shorter the length L of the larger side 1 must be.

Coherently, it has been experimentally found that the greater the density of stitches 15 in the direction B (namely the quantity of stitches on the same stitching line SL per unit of space), the shorter the length W of the shorter side 11 must be.

Merely by way of example, experimental tables are reported below, the first of which correlates the average length AL of the fibres 15 with the length L of the larger side 10, while the second table correlates the length of the stitches 15 with the length W of the smaller side 11 of the rectangular portions 9.

| Average length AL of fibre (mm - direction A) | Length L of larger side 10 (mm - direction A) |
|---|---|
| 35mm±5mm | 75mm±50% |
| 56mm± 5mm | 100mm±50% |
| 77mm±5mm | 150mm±50% |
| 120mm±5mm | 240mm±50% |

| Length of stitches 15 (mm - direction B) | Length W of smaller side 11 (mm - direction B) |
|---|---|
| 1.0mm | 3.0-10.0mm |
| 1.5mm | 4.5-15.0mm |
| 2.0mm | 6.0-20.0mm |
| 2.5mm | 7.5-25.0mm |
| 3.0mm | 9.0-30.0mm |
| 3.5mm | 10.5mm-35.0mm |
| 4.0mm | 12.0mm-40.0mm |
| 4.5mm | 13.5mm-45. 0mm |

In particular, the above tables represent some examples of ranges that would allow the desired effects to be achieved, at least partly. Within said ranges, the effective values of the lengths L and W are preferably determined experimentally according to the nonwoven fabric 2 to be recycled.

In some non-limiting cases not illustrated, in addition to what has been described, the method further comprises, upstream (preferably to facilitate conveying) or downstream of the division of the web 7 into the quadrangular portions 9, the step of cutting the binding yarns 3 (separately relative to formation of the quadrangular portions 9) so that their length is smaller than the length W of the smaller side. In this way, it is possible to divide the web 7 into quadrangular portions 9 having larger dimensions (especially in the binding direction SD).

In other words, without limitation, the height of the rectangular portions 9 (namely the length W of the smaller side) can also be greater than previously indicated (for example 15 cm) if the binding yarns 3 are interrupted creating periodic interruptions of the (warp) binding yarns 3, for example by means of blades, shears or, in any case, cutting or breaking processes that precede or follow the division into quadrangular portions 9. In fact, it has been found that the stitches 15 release the fibres 5 (or in any case loosen their grip thereon) even if present in a greater number than previously indicated, for example more than fifteen.

In fact, it has been observed that in the quadrangular portions 9 where the binding yarns 3 have been severed during cutting of the portion 9 and/or by further actions (such as the above-mentioned interruptions), the fibres 5 are still joined to one another, but in a weaker manner mainly determined by the intertwining of said fibres.

Advantageously but without limitation, as illustrated in the embodiments of figures 1 and 2, the processing method entails introducing the portions 9 into a production line 16 of the nonwoven fabric 2, preferably in the area of a carding machine 17 (of known type and therefore not further described below), obtaining flocks 18 of recycled fibre 19 to be re-used which are "combed", namely having a common average direction.

In some non-limiting cases, therefore, the apparatus 1 comprises the carding machine 17, in particular driven by the control unit 14. Physically, the control unit 14 can be composed of a single device or several devices separate from one another and communicating through a network of known type.

Alternatively or additionally, according to the quality of the fibre, the dimensions of the portions 9 and the available overall dimensions, previously to or in place of introduction into the carding machine 17, the method comprises the further step of freeing the fibre 5 from the binding yarns 3. Said phase preferably consists in pulling the fibre out of the binding yarns 3 by means of targeted tractions T', T'' performed in the appropriate directions (A, B), namely by exerting said tractions T, T' in the appropriate directions, the fibres 5 are pulled out of the binding yarns 3 without necessarily tearing them.

The step of freeing the fibre 5 from the binding yarns 3 is performed by carrying out:
at least one traction T' in a direction parallel to the binding direction SD (namely in the direction B indicated in figure 4), in particular pulling the fibres 5 in opposite directions (as indicated by the arrows 20), grasping them from the larger side 10 and from their opposite side 10; and/or
at least one traction T'' in a transverse direction, preferably orthogonal, to the binding direction SD (namely in the direction

A indicated in figure 4), in particular pulling the fibre in opposite directions (as indicated by the arrows 21), grasping it from the smaller side 11 and from its opposite side 11.

In particular, the traction T' results in the fibres 5 sliding out of the stitches 15 which are no longer tenacious (namely no longer tight on the fibres 5) and unravelling from one another, largely maintaining their integrity.

In particular, the freed fibre 5 determines flocks 18 of recycled fibre 19 to be reused.

In some non-limiting cases, therefore, the apparatus 1 comprises traction means 26, in particular provided with clamps and relative actuator systems (driven by the control unit 14), configured to carry out the above-mentioned traction operations T', T".

Preferably but without limitation, the step of freeing the fibres 5 is carried out by clamping the quadrangular portion 9 peripherally (namely along respective edges 22 and 23) on opposite sides 10, 11 along the main part of their development (namely along the main part of the length L, W), in particular along their entire development (namely along the entire length L, W).

Preferably but without limitation, the first cutting direction C' is substantially parallel to the stitching direction SD, and the second cutting direction C'' is transverse, in particular orthogonal, to the stitching direction SD. In this way, rectangular portions 9 are obtained that facilitate freeing of the fibres 5 for the above-mentioned reasons.

According to some preferred non-limiting embodiments, like those illustrated in figures 1 and 2, the step of cutting comprises a first cutting sub-step CS' (carried out by a first cutting station 12), during which the web 7 is cut along the conveying direction CD, and a second cutting sub-step CS" (carried out by a second cutting station 12), subsequent to the first cutting sub-step CS', during which the web is cut along a direction (for example direction A) transverse, in particular orthogonal, to the conveying direction CD.

In other non-limiting cases not illustrated, the step of cutting the web 7 into the portions 9 is carried out by a press cutting system 8, in which a plurality of matrix blade elements 13 cut the web 7.

In the non-limiting embodiment of figure 2, the web 7 of nonwoven fabric to be recycled is obtained from removal of the edges 24 during the production of a nonwoven fabric 2. In this way, the edges 24 are reintroduced into the production process instead of being discarded.

In particular, therefore, the apparatus 1 can be of the stand-alone type, as illustrated in figure 1, to obtain flocks 18 of recycled fibre 19 for any subsequent use, or can be integrated in an automatic machine 25 for the production of a conventional nonwoven fabric 2, so as to use all the available fibres 5.

In accordance with the above, without limitation, the flocks 18 can be reintroduced into any production process (not necessarily stitch-bond nonwoven fabrics) that requires the use thereof.

In accordance with a further aspect of the present invention, a nonwoven fabric 2 is provided, preferably of stitch-bond type, comprising at least the substantially planar substrate 4 of fibres and a plurality of binding yarns 3, stitched onto the substantially planar substrate 4 and extending along the binding direction SD. In detail, the planar substrate 4 of fibres comprises recycled fibre 19 obtained at least partly by the method described in the present description.

In particular, especially if the fibres are not purposely treated to eliminate any residue, the planar substrate 4 of fibres 19 comprises fragments of the binding yarns 3 generated by cutting of the recycled web 7 into quadrangular portions. Said fragments do not affect the characteristics (or, in particular, the aesthetics) of the nonwoven fabric 2 obtained also or totally from the recycled web 7 (from the recycled fibre 19).

Below, reference will be made to figure 1, which represents a possible non-limiting embodiment of the apparatus 1 described above. In particular, at the inlet into the left-hand portion of figure 1, a web 7 of nonwoven fabric 2 to be recycled can be seen. The web 7 is conveyed along the conveying direction CD (parallel to the binding direction SD of the binding yarns 3 of the nonwoven fabric 2) through a first cutting station 12, inside which the web 7 is cut into strips parallel to the feed direction, thus facilitating the movement of said material. Subsequently, the above-mentioned parallel strips are conveyed through a second cutting station 12, inside which they are cut into the rectangular portions 9 with smaller side 11 parallel to the feed direction CD and therefore to the binding direction SD.

Subsequently, the rectangular portions 9 are conveyed towards the above-mentioned traction means 26, obtaining flocks 18 of recycled fibre, which can be reintroduced at the beginning of the production chain of other nonwoven fabrics 2 (or for any other use that may be required).

Differently, in the case of figure 2, the apparatus 1 is part of an automatic machine 25 for the production of a nonwoven fabric 2. Bales 27 of fibres 5 (non-recycled), 19 (recycled) or directly rectangular portions 9 are supplied to the inlet of said machine 25 and conveyed by the conveying system 6 towards a carding machine 17 (and if necessary a web laying machine, not illustrated for the sake of simplicity since it is of known type), which provides at the outlet the planar substrate 4 of fibres (substantially combed along a direction orthogonal to the conveying direction CD).

Subsequently, the substrate 4 is conveyed through a binding station 28, which provides stitching of the binding yarns 3 parallel to the conveying direction CD. In this way, the fibres 5, 19 that compose the planar substrate 4 are bound to one another in a stable manner.

Downstream of the binding station 28, the web 7 thus obtained is "edged", namely the lateral edges are removed by means of blade elements 13, which substantially perform the first cutting sub-step CS', after which a further cutting station 12 forms the rectangular portions 9, which can be directly reintroduced towards the carding machine 17 or undergo a further process through the traction means 26 to obtain the flocks 18 of recycled fibre 19 to be added to the bales 27 of fibre 5, 19 at the beginning of the process. In this way, the edges of the web 7 produced are entirely recycled instead of being discarded, generating waste and environmental impact.

The choice between direct introduction of the quadrangular portions 9 into the carding machine 17 or towards the traction means 26 is made as required, empirically, according to the materials used, namely the type of fibre or the type of binding yarns, and the machines available.

In some non-limiting cases, the fibres 5 of the nonwoven fabric 2 to be recycled differ from the raw fibres as they are processed (dyed or combined with substances) to give them specific properties (flameproof, water-repellent, etc.). In these cases, it is preferable (without limitation) to restore said processed fibres 5 to their original state, removing the dyes and chemicals added to them in their raw form.

In particular, the processes for carrying out these operations are difficult to perform and in any case inefficient if carried out on the entire piece of nonwoven fabric 2 to be recycled. In these cases, division of the web 7 (for example of a piece of nonwoven fabric 2) into the quadrangular portions 9 results in a fraction small enough to make the above-mentioned operations for the removal of dyes and/or chemical agents efficient and effective, and cohesive enough to preserve the fibres 5 from mechanical or structural damage (which they would be subject to if the processing were carried out directly on the already separated recycled fibres 19).

A non-limiting example is a process that uses chemicals to bleach the nonwoven fabric 2 to be recycled. In particular, the necessary condition for the dyes to separate from the fibres 5 is that the chemistry underlying the process involves every part of the nonwoven fabric to be recycled. However, as in washing processes, the uniformity of the result is obtained with mechanical actions that expose every part of the nonwoven fabric 2 to be recycled to the active elements of the process (for example, to a soap, as occurs in an ordinary domestic washing machine to make laundry washing efficient and effective).

In particular, using a metaphor, greater efficiency can be obtained in the process by filling the washing machine with many handkerchiefs rather than with one large sheet. The sheet tends to twist/roll up and create areas less exposed to the treatment or not exposed at all. The operation of the washing machine, furthermore, is based on an abundant use of water that penetrates into the fibres of the garments, taking the detergent with it. In a bleaching process, however, the chemical agents may not be as easily carried by the water, due to incompatibility with it or, for example, greater density, therefore rendering ineffective the processing of large portions of nonwoven fabric. On the other hand, subjecting the single fibres, already divided, to aggressive mechanical processes would damage them regardless of the success of the bleaching. In this sense, the apparatus and the method described above are preliminary to the efficiency optimisation of processes adapted to bleach or generically eliminate any (chemical) elements adhered to the raw fibre and which would compromise the reuse thereof on a par with non recycled fibre.

Although the invention described above makes particular reference to precise implementation examples, it should not be considered limited to said examples, since all the variations, modifications or simplifications covered by the attached claims fall within its protective scope such as, for example, different cutting, conveying or traction means, a different conformation of the apparatus, a different flow of the steps of the method, a different orientation of the binding yarns, a different length or proportion of the sides of the quadrangular portions, other processes for elimination of chemical agents, etc.

The apparatus, method and fabric described above offer numerous advantages.

Firstly, a stitch-bond nonwoven fabric can be recycled producing a recycled fibre similar to a non-recycled raw fibre, thus making subsequent further recycling thereof possible without degeneration or with minimum degeneration, therefore offering practically infinite recycling possibilities.

Furthermore, the recycled product does not necessarily have degraded mechanical characteristics compared to the non recycled product.

In addition, it is possible to obtain fibre similar to non-recycled raw fibre having a lower cost, at the same time producing a positive impact on the environment in terms of emissions and pollution due to waste.

Lastly, effective elimination of chemical agents on the processed fibre is obtained, exploiting the diffusion generated by the division of the web of nonwoven fabric into portions of modest but sufficiently cohesive dimensions, for a mechanical and chemical treatment that does not compromise the properties of said fibre.

## Claims

1. A processing method to recycle a stitch-bond nonwoven fabric (2) comprising at least one planar substrate (4) of fibres (5) and a plurality of binding yarns (3), which are stitched on the planar substrate (4) and extend along at least one binding direction (SD); the method comprises the steps of:
- conveying at least one web (7) of nonwoven fabric (2) along a conveying plane (CP) in a conveying direction (CD);
the recycling processing method being **characterized in that** it comprises the further step of:
- cutting the web (7) of nonwoven fabric (2) along a first cutting direction (C') and along a second cutting direction (C"), which is different from the first cutting direction (C'), dividing it into quadrangular portions (9);
or
- cutting or tearing at least some of the binding yarns (3) so that their length is smaller than the width of the web (7) of nonwoven fabric (2).

2. The method according to claim 1, wherein the first cutting direction (C') and the second cutting direction (C'') are orthogonal to one another, so as to form portions (9) of the web (7) of nonwoven fabric (2) that are substantially rectangular and comprise a larger side (10) and a smaller side (11).

3. The method according to claim 2, wherein the larger side (10) extends along a first direction, which is substantially orthogonal to the binding direction (SD), whereas the smaller side (11) extends along a second direction, which is substantially parallel to the binding direction (SD).

4. The method according to claim 2 or 3, wherein the larger side (10) has a length (L) at least equal to, preferably greater than, the average length (AL) of the fibres (5) comprised in the planar substrate (4); in particular, the larger side (10) has a length (L) greater by at least 2%, in particular by at least 5%, more in particular by at least 10% with respect to the average length (AL) of the fibres (5) comprised in the planar substrate (4); in particular, the length (L) of the larger side (10) is smaller than 250% of the average length (AL) of the fibres (5).

5. The method according to claim 2, 3 or 4, wherein the smaller side (11) has a length (W) at least equal to, preferably greater than, the average width (AW) of the fibres (5) comprised in the planar substrate (4); in particular, the smaller side (11) has a length (W) equal to or greater than 1 cm, in particular ranging from 2 to 7 cm, more in particular from 3 to 5 mm.

6. The method according to any one of the claims from 2 to 5, wherein the smaller side (11) comprises a limited number of stitches (15) of binding yarns (3) smaller than 15, more in particular smaller than 10, preferably smaller than 7.

7. The method according to any one of the claims from 2 to 6 and comprising the further step of cutting the binding yarns (3) so that their length is smaller than the length of the smaller side (11).

8. The method according to any one of the preceding claims, wherein the quadrangular portions (9) are introduced into a production line producing the nonwoven fabric (2) in the area of a carding machine (17), obtaining flocks (18) of recycled fibre (19) to be reused.

9. The method according to any one of the claims from 2 to 8 and comprising the further step of freeing the fibre from the binding yarns (3) by performing:
at least one traction (T') in a direction (B) parallel to the binding direction (SD), in particular by pulling the nonwoven fabric (2), in particular the fibres (5), in opposite directions, grasping it from the larger side (10) and from its opposite side; and/or
at least one traction (T") in a direction (A) transverse, preferably orthogonal, to the binding direction (SD), in particular by pulling the nonwoven fabric (2), in particular the fibres (5), in opposite directions, grasping it from the smaller side (11) and from its opposite side;
the freed fibre determining flocks (18) of recycled fibre (19) to be reused.

10. The method according to claim 8, wherein the step of freeing the fibres (5) is carried out by peripherally clamping the rectangular portion on opposite sides along the main part of their development, in particular along their entire development.

11. The method according to any one of the preceding claims, wherein the first cutting direction (C') is substantially parallel to the stitching direction and wherein the second cutting direction (C") is transverse, in particular orthogonal, to the stitching direction.

12. The method according to any one of the preceding claims, wherein the step of cutting comprises a first cutting sub-step (CS'), during which the web (7) is cut along the conveying direction (CD), and a second cutting sub-step (CS"), which is subsequent to the first cutting sub-step (CS') and during which the web (7) is cut along a direction that is transverse, in particular orthogonal, to the conveying direction (CD).

13. The method according to any one of the preceding claims, wherein the web (7) of nonwoven fabric (2) to be recycled is obtained from the removal of the edges during the production of a nonwoven fabric (2).

14. A processing apparatus (1) to recycle a stitch-bond nonwoven fabric (2) comprising at least one planar substrate (4) of fibres (5) and a plurality of binding yarns (3), which are stitched on the planar substrate (4) and extend along at least one binding direction (SD); the apparatus (1) comprises:
- a conveying system (6) to convey at least one web (7) of nonwoven fabric (2) along a conveying plane (CP) in a conveying direction (CD);
the apparatus (1) being **characterized in that** it comprises:
- at least one cutting system (8) to cut the web (7) of nonwoven fabric (2) along a first cutting direction (C') and along a second cutting direction (C"), which is different from the first cutting direction (C'), dividing it into quadrangular portions (9); in particular, the first cutting direction (C') and the second cutting direction (C") are orthogonal to one another, so as to form portions (9) of the web (7) of nonwoven fabric (2) that are substantially rectangular and comprise a larger side (10) and a smaller side (11) or
a cutting or tearing system (8) to cut or tear at least some of the binding yarns (3) so that their length is smaller than the width of the web (7) of nonwoven fabric (2);
and
- a control unit (14) configured to control the apparatus (1) so as to carry out the method according to any one of the claims from 1 to 13.

15. A nonwoven fabric (2), preferably of the stitch-bond kind, comprising at least one planar substrate (4) of fibres (5) and a plurality of binding yarns (3), which are stitched on the planar substrate (4) and extend along at least one binding direction (SD);
the nonwoven fabric (2) being **characterized in that** the planar substrate (4) of fibres (5) comprises recycled fibre (19) at least partly obtained by means of the method according to any one of the claims from 1 to 14;
wherein the planar substrate (4) of fibres (5) comprises fragments of the binding yarns (3) generated by cutting the web (7) to be recycled into quadrangular portions (9).

## Patentansprüche

1. Verarbeitungsverfahren zum Recyceln eines Polfaser-Vliesstoffs (2), der mindestens ein flächiges Substrat (4) aus Fasern (5) und eine Vielzahl von Bindegarnen (3) umfasst, die auf das flächige Substrat (4) aufgenäht sind und sich entlang mindestens einer Binderichtung (SD) erstrecken; wobei das Verfahren die folgenden Schritte umfasst:
- Fördern mindestens einer Bahn (7) aus Vliesstoff (2) entlang einer Förderebene (CP) in einer Förderrichtung (CD);
wobei das Recycling-Verarbeitungsverfahren **dadurch gekennzeichnet ist, dass** es den folgenden weiteren Schritt umfasst:
- Schneiden der Bahn (7) aus Vliesstoff (2) entlang einer ersten Schneidrichtung (C') und entlang einer zweiten Schneidrichtung (C"), die sich von der ersten Schneidrichtung (C') unterscheidet, deren Teilen in viereckige Abschnitte (9); oder
- Schneiden oder Aufreißen zumindest einiger der Bindegarne (3), sodass ihre Länge kleiner als die Breite der Bahn (7) aus Vliesstoff (2) ist.

2. Verfahren nach Anspruch 1, wobei die erste Schneidrichtung (C') und die zweite Schneidrichtung (C") orthogonal zueinander verlaufen, um Abschnitte (9) der Bahn (7) aus Vliesstoff (2) zu bilden, die im Wesentlichen rechteckig sind und eine größere Seite (10) sowie eine kleinere Seite (11) umfassen.

3. Verfahren nach Anspruch 2, wobei sich die größere Seite (10) entlang einer ersten Richtung erstreckt, die im Wesentlichen orthogonal zur Binderichtung (SD) verläuft, während sich die kleinere Seite (11) entlang einer zweiten Richtung erstreckt, die im Wesentlichen parallel zur Binderichtung (SD) verläuft.

4. Verfahren nach Anspruch 2 oder 3, wobei die größere Seite (10) eine Länge (L) aufweist, die mindestens gleich, vorzugsweise größer als die mittlere Länge (AL) der in dem flächigen Substrat (4) enthaltenen Fasern (5) ist; insbesondere weist die größere Seite (10) eine Länge (L) auf, die um mindestens 2 %, weiter insbesondere um mindestens 5 % größer ist, insbesondere um mindestens 10 %, bezogen auf die mittlere Länge (AL) der in dem flächigen Substrat (4) enthaltenen Fasern (5);
insbesondere ist die Länge (L) der größeren Seite (10) kleiner als 250 % der mittleren Länge (AL) der Fasern (5).

5. Verfahren nach Anspruch 2, 3 oder 4, wobei die kleinere Seite (11) eine Länge (W) aufweist, die mindestens gleich, vorzugsweise größer als die mittlere Breite (AW) der in dem flächigen Substrat (4) enthaltenen Fasern (5) ist; insbesondere weist die kleinere Seite (11) eine Länge (W) auf, die gleich oder größer als 1 cm ist, insbesondere im Bereich von 2 bis 7 cm, weiter insbesondere von 3 bis 5 mm liegt.

6. Verfahren nach einem der Ansprüche 2 bis 5, wobei die kleinere Seite (11) eine begrenzte Anzahl von Maschen (15) von Bindegarnen (3) umfasst, die kleiner als 15, weiter insbesondere kleiner als 10, vorzugsweise kleiner als 7 sind.

7. Verfahren nach einem der Ansprüche 2 bis 6 und umfassend den weiteren Schritt zum Schneiden der Bindegarne (3), sodass ihre Länge kleiner als die Länge der kleineren Seite (11) ist.

8. Verfahren nach einem der vorhergehenden Ansprüche, wobei die viereckigen Abschnitte (9) in eine Produktionslinie eingeführt werden, die den Vliesstoff (2) im Bereich einer Kardiermaschine (17) herstellt, wodurch Flocken (18) aus recycelten Fasern (19) erhalten werden, die wiederverwendet werden sollen.

9. Verfahren nach einem der Ansprüche 2 bis 8 und umfassend den weiteren Schritt zum Befreien der Faser von den Bindegarnen (3), indem Folgendes durchgeführt wird:
mindestens einen Zug (T') in einer Richtung (B) parallel zur Binderichtung (SD), insbesondere durch Ziehen des Vliesstoffs (2), insbesondere der Fasern (5), in entgegengesetzte Richtungen, indem dieser an der größeren Seite (10) und an seiner entgegengesetzten Seite ergriffen wird; und/oder
mindestens einen Zug (T") in einer Richtung (A) quer, vorzugsweise orthogonal, zur Binderichtung (SD), insbesondere durch Ziehen des Vliesstoffs (2), insbesondere der Fasern (5), in entgegengesetzte Richtungen, indem dieser an der kleineren Seite (11) und an seiner entgegengesetzten Seite ergriffen wird;
wobei die befreiten Fasern Flocken (18) aus recycelten Fasern (19) bilden, die wiederverwendet werden sollen.

10. Verfahren nach Anspruch 8, wobei der Schritt zum Befreien der Fasern (5) durchgeführt wird, indem der rechteckige Abschnitt an entgegengesetzten Seiten entlang des Hauptteils ihrer Entwicklung, insbesondere entlang ihrer gesamten Entwicklung, am Umfang festgeklemmt wird.

11. Verfahren nach einem der vorhergehenden Ansprüche, wobei die erste Schneidrichtung (C') im Wesentlichen parallel zur Nahtrichtung verläuft und wobei die zweite Schneidrichtung (C") quer, insbesondere orthogonal, zur Nahtrichtung verläuft.

12. Verfahren nach einem der vorhergehenden Ansprüche, wobei der Schritt zum Schneiden einen ersten Schneide-Teilschritt (CS'), während dessen die Bahn (7) entlang der Förderrichtung (CD) geschnitten wird, sowie einen zweiten Schneide-Teilschritt (CS") umfasst, der auf den ersten Schneide-Teilschritt (CS') folgt und während dessen die Bahn (7) entlang einer Richtung geschnitten wird, die quer, insbesondere orthogonal, zur Förderrichtung (CD) verläuft.

13. Verfahren nach einem der vorhergehenden Ansprüche, wobei die zu recycelnde Bahn (7) aus Vliesstoff (2) durch das Entfernen der Ränder während der Herstellung eines Vliesstoffs (2) erhalten wird.

14. Verarbeitungsvorrichtung (1) zum Recyceln eines Polfaser-Vliesstoffs (2), der mindestens ein flächiges Substrat (4) aus Fasern (5) und eine Vielzahl von Bindegarnen (3) umfasst, die auf das flächige Substrat (4) aufgenäht sind und sich entlang mindestens einer Binderichtung (SD) erstrecken; wobei die Vorrichtung (1) umfasst:
- ein Fördersystem (6) zum Fördern mindestens einer Bahn (7) aus Vliesstoff (2) entlang einer Förderebene (CP) in einer Förderrichtung (CD);
wobei die Vorrichtung (1) **dadurch gekennzeichnet ist, dass** sie umfasst:
- mindestens ein Schneidsystem (8) zum Schneiden der Bahn (7) aus Vliesstoff (2) entlang einer ersten Schneidrichtung (C') und entlang einer zweiten Schneidrichtung (C"), die sich von der ersten Schneidrichtung (C') unterscheidet, deren Teilen in viereckige Abschnitte (9); insbesondere verlaufen die erste Schneidrichtung (C') und die zweite Schneidrichtung (C") orthogonal zueinander, um Abschnitte (9) der Bahn (7) aus Vliesstoff (2) zu bilden, die im Wesentlichen rechteckig sind und eine größere Seite (10) sowie eine kleinere Seite (11) umfassen oder
ein Schneid- oder Aufreißsystem (8) zum Schneiden oder Aufreißen zumindest einiger der Bindegarne (3), sodass ihre Länge kleiner als die Breite der Bahn (7) aus Vliesstoff (2) ist; und
- eine Steuereinheit (14), die dazu konfiguriert ist, die Vorrichtung (1) zu steuern, um das Verfahren nach einem der Ansprüche 1 bis 13 durchzuführen.

15. Vliesstoff (2), vorzugsweise vom "Polfaser"-Typ, der mindestens ein flächiges Substrat (4) aus Fasern (5) und eine Vielzahl von Bindegarnen (3) umfasst, die auf das flächige Substrat (4) aufgenäht sind und sich entlang mindestens einer Binderichtung (SD) erstrecken;
wobei der Vliesstoff (2) **dadurch gekennzeichnet ist, dass** das flächige Substrat (4) aus Fasern (5) recycelte Fasern (19) umfasst, die zumindest teilweise mittels des Verfahrens nach einem der Ansprüche 1 bis 14 erhalten wurden;
wobei das flächige Substrat (4) aus Fasern (5) Fragmente der Bindegarne (3) umfasst, die durch Schneiden der zu recycelnden Bahn (7) in viereckige Abschnitte (9) erzeugt werden.

## Revendications

1. Procédé de traitement pour recycler un tissu non-tissé à liaison par couture (2) comprenant au moins un substrat plan (4) de fibres (5) et une pluralité de fils de liaison (3), qui sont cousus sur le substrat plan (4) et s'étendent le long d'au moins une direction de liaison (SD) ; le procédé comprend les étapes suivantes :
- l'acheminement d'au moins une bande (7) de tissu non tissé (2) le long d'un plan de transport (CP) dans une direction de transport (CD) ;
le procédé de traitement de recyclage étant **caractérisé en ce qu'**il comprend l'étape supplémentaire consistant à :
- couper la bande (7) de tissu non tissé (2) le long d'une première direction de coupe (C') et le long d'une seconde direction de coupe (C"), étant différente de la première direction de coupe (C'), en la divisant en pièces quadrangulaires (9) ; ou
- couper ou déchirer au moins une partie des fils de liaison (3) de manière à ce que leur longueur soit inférieure à la largeur de la bande (7) de tissu non tissé (2).

2. Procédé selon la revendication 1, la première direction de coupe (C') et la seconde direction de coupe (C") étant orthogonales l'une par rapport à l'autre, de manière à former des pièces (9) de la bande (7) de tissu non tissé (2) qui sont sensiblement rectangulaires et comprennent un côté plus long (10) et un côté plus court (11).

3. Procédé selon la revendication 2, le côté le plus long (10) s'étendant le long d'une première direction, qui est sensiblement orthogonale à la direction de liaison (SD), tandis que le côté le plus court (11) s'étend le long d'une seconde direction, qui est sensiblement parallèle à la direction de liaison (SD).

4. Procédé selon la revendication 2 ou 3, le côté le plus long (10) ayant une longueur (L) au moins égale à, de préférence supérieure à, la longueur moyenne (AL) des fibres (5) présentes dans le substrat plan (4) ; en particulier, le côté le plus long (10) ayant une longueur (L) supérieure d'au moins 2 %, en particulier d'au moins 5 %, et plus particulièrement d'au moins 10 % par rapport à la longueur moyenne (AL) des fibres (5) présentes dans le substrat plan (4) ; en particulier, la longueur (L) du côté le plus long (10) est inférieure à 250 % de la longueur moyenne (AL) des fibres (5).

5. Procédé selon la revendication 2, 3 ou 4, le côté le plus court (11) ayant une longueur (W) au moins égale à, de préférence supérieure à, la largeur moyenne (AW) des fibres (5) présentes dans le substrat plan (4) ; en particulier, le côté le plus court (11) ayant une longueur (W) égale ou supérieure à 1 cm, en particulier allant de 2 à 7 cm, et plus particulièrement de 3 à 5 mm.

6. Procédé selon l'une quelconque des revendications 2 à 5, le côté le plus court (11) comprenant un nombre limité de points de couture (15) de fils de liaison (3), inférieur à 15, plus particulièrement inférieur à 10, de préférence inférieur à 7.

7. Procédé selon l'une quelconque des revendications 2 à 6 et comprenant en outre l'étape consistant à couper les fils de liaison (3) de manière à ce que leur longueur soit inférieure à la longueur du côté le plus court (11).

8. Procédé selon l'une quelconque des revendications précédentes, les pièces quadrangulaires (9) étant introduites dans une chaîne de production fabriquant le tissu non-tissé (2) dans la zone d'une carde (17), ce qui permet d'obtenir des flocs (18) de fibres recyclées (19) destinés à être réutilisés.

9. Procédé selon l'une quelconque des revendications 2 à 8 et comprenant l'étape supplémentaire consistant à libérer la fibre des fils de liaison (3) en effectuant :
au moins une traction (T') dans une direction (B) parallèle à la direction de liaison (SD), en particulier en tirant le tissu non-tissé (2), en particulier les fibres (5), dans des directions opposées, en le saisissant par le côté le plus long (10) et par son côté opposé ; et/ou
au moins une traction (T") dans une direction (A) transversale, de préférence orthogonale, à la direction de liaison (SD), en particulier en tirant sur le tissu non-tissé (2), en particulier sur les fibres (5), dans des directions opposées, en le saisissant par le côté le plus court (11) et par son côté opposé ;
la fibre libérée formant des flocs (18) de fibre recyclée (19) destinés à être réutilisés.

10. Procédé selon la revendication 8, **caractérisé en ce que** l'étape consistant à libérer les fibres (5) est réalisée en serrant périphériquement la pièce rectangulaire sur des côtés opposés le long de la partie principale de leur développement, en particulier sur toute la longueur de leur développement.

11. Procédé selon l'une quelconque des revendications précédentes, la première direction de coupe (C') étant sensiblement parallèle à la direction de piquage et la seconde direction de coupe (C") étant transversale, en particulier orthogonale, à la direction de piquage.

12. Procédé selon l'une quelconque des revendications précédentes, l'étape de coupe comprenant une première sous-étape de coupe (CS'), au cours de laquelle la bande (7) est coupée le long de la direction de transport (CD), et une seconde sous-étape de coupe (CS"), qui suit la première sous-étape de coupe (CS') et au cours de laquelle la bande (7) est coupée le long d'une direction étant transversale, en particulier orthogonale, à la direction de transport (CD).

13. Procédé selon l'une quelconque des revendications précédentes, la bande (7) de tissu non-tissé (2) à recycler étant obtenue à partir de l'élimination des bords lors de la fabrication d'un tissu non-tissé (2).

14. Appareil de traitement (1) pour recycler un tissu non-tissé à liaison par couture (2) comprenant au moins un substrat plan (4) de fibres (5) et une pluralité de fils de liaison (3), qui sont cousus sur le substrat plan (4) et s'étendent le long d'au moins une direction de liaison (SD) ; l'appareil (1) comprend :
- un système de transport (6) pour acheminer au moins une bande (7) de tissu non tissé (2) le long d'un plan de transport (CP) dans une direction de transport (CD) ; l'appareil (1) étant **caractérisé en ce qu'**il comprend :
- au moins un système de coupe (8) pour couper la bande (7) de tissu non tissé (2) le long d'une première direction de coupe (C') et le long d'une seconde direction de coupe (C"), étant différente de la première direction de coupe (C'), en la divisant en pièces quadrangulaires (9) ; en particulier, la première direction de coupe (C') et la seconde direction de coupe (C") sont orthogonales l'une par rapport à l'autre, de manière à former des pièces (9) de la bande (7) de tissu non tissé (2) qui sont sensiblement rectangulaires et comprennent un côté long (10) et un côté court (11) ou
un système (8) de coupe ou de déchirement pour couper ou déchirer au moins une partie des fils de liaison (3) de manière à ce que leur longueur soit inférieure à la largeur de la bande (7) de tissu non tissé (2) ;
et
- une unité de commande (14) configurée pour commander l'appareil (1) de manière à mettre en œuvre le procédé selon l'une quelconque des revendications 1 à 13.

15. Tissu non-tissé (2), de préférence du type à liaison par couture, comprenant au moins un substrat plan (4) de fibres (5) et une pluralité de fils de liaison (3), qui sont cousus sur le substrat plan (4) et s'étendent le long d'au moins une direction de liaison (SD) ;
le tissu non-tissé (2) étant **caractérisé en ce que** le substrat plan (4) de fibres (5) comprend des fibres recyclées (19) obtenues au moins en partie au moyen du procédé selon l'une quelconque des revendications 1 à 14 ;
le substrat plan (4) de fibres (5) comprenant des fragments des fils de liaison (3) obtenus par coupe de la bande (7) à recycler en pièces quadrangulaires (9).
